# EUROPEAN PATENT SPECIFICATION

(11) **EP 2 429 112 B1**
(45) Date of publication and mention of the grant of the patent: **21.06.2017**
(21) Application number: 11007291.5
(22) Date of filing: 08.09.2011
(51) Int. Cl.: H04B 7/04, H04L 27/26, H04L 5/00, H04B 3/54, H04L 25/02

(54) **Frame structure for MIMO communication system**
Rahmenstruktur für ein MIMO-Kommunikationssystem
Structure de trame pour un système de communication MIMO

(30) Priority: 08.09.2010 US 381064 P; 09.09.2010 US 381426 P
(43) Date of publication of application: 14.03.2012
(73) Proprietor: Lantiq Deutschland GmbH, 85579 Neubiberg (DE)
(72) Inventor: Kim, Joon Bae, Lexington MA 02420 (US); Gross, Richard, Acton MA 01720 (US); Oksman, Vladimir, Morganville NJ 07751 (US)
(74) Representative: Kraus & Weisert Patentanwälte PartGmbB

(56) References cited:
- EP-A2- 1 681 821
- WO-A1-2009/023860
- WO-A2-2010/011056
- WO-A2-2010/013959

## Description

Data packet transmission in multipoint-to-multipoint networks (e.g., ad-hoc or mesh networks) is usually arranged by sending one or more data packets. A data packet is often encoded and modulated. Also, a data packet typically includes at least one frame. Each frame is preceded by a preamble. The primary purposes of the preamble include 1) enabling the receiver of the frame to detect the frame on the transmission medium, 2) adjusting the gain of the receiver (e.g., an analog front end (AFE)) and synchronizing the clock so that frame is received when expected. The frame also has a header that carries information helping the receiver to address, demodulate, and decode the frame.

Because of their ubiquitous nature, powerlines are increasing in popularity as a transmission medium for many networks that use data packet transmission techniques. For example, Power Line Communication (PLC), also called Mains Communication, Power Line Transmission (PLT), Broadband Powerline (BPL), Powerband or Power Line Networking (PLN), is a term describing several different systems for using power distribution wires for simultaneous distribution of data. PLC systems can communicate voice and data by superimposing a signal(s) over standard 50 or 60 Hz alternating current (AC). For indoor applications, PLC equipment can use household electrical power wiring as a transmission medium.

Most AC power outlets have 3 connections, phase (P), neutral (N), ground (G). A PLC system can utilize two independent channels provided by these three connections (e.g., P-N pair for one channel and N-G pair for another channel). Utilizing more than two channels is also possible. Without loss of generality, only two channels are assumed in this disclosure for the simplicity of description and illustration.

A Single-Input Singte-Output (SISO) PLC system often utilizes P-N pair for its communication channel because of its ubiquitous availability. However, emerging PLC Multi-Input Multi-Output (MIMO) technology takes advantage of the remaining communication channel(s) to increase spectral efficiency and throughput

Since most deployed PLC modems are designed to operate in a SISO system, one important requirement of a PLC MIMO system is interoperability with existing SISO systems. Since MIMO channels are not completely orthogonal or electrically isolated, signals transmitted over two or more channels may interfere with each other. Therefore, it is desirable to construct a physical layer (PHY) frame structure that enables performance enhancements from MIMO systems without causing performance degradation in existing SISO systems.

European patent application 1 681 821 A2 discloses preamble sequences for a multicarrier system. A set of preamble sequences is configured by cyclic shift transpose sequences with different time offsets. Thus a sequence is segmented into subsequences. Base stations configuring a MIMO-OFDM communication system differently use subsequences of the preambles sequences such that the orthogonality can be maintained between transmit antennas and also between the base stations.

Described herein are implementations related to data communication using a frame that includes at least two data packets. One of the data packets includes a preamble that is separated from a payload by a gap, void or empty space. Another of the data packets includes a preamble that is aligned with the gap, void or empty space. A receiver of the frame may perform channel measurements during the gap, void or empty space.

The described implementations are particularly useful in systems that employ Multi-Input Multi-Output (MIMO). In particular, the various frame implementations described herein enable a receiver of an implementation specific frame to reliably execute communication and interference measurements an the channels of a MIMO system. In addition, the frames implemented by the described implementations are compatible with Single-Input Single-Output (SISO) systems, support various MIMO schemes, e.g., space time diversity and spatial multiplexing, and enable simplified transceiver design.

The independent claims define the invention in various aspects. The dependent claims define embodiments of the invention. The embodiments which do not fall within the scope of the claims are considered to be examples.

In a first aspect, the invention encompasses an apparatus comprising frame construction unit configured to construct a frame. The frame may include a packet including a first and second part, the first part separated from the second part by a quiet period gap; and another packet including a third part, the third part aligned with at least a portion of the quiet period gap. In an embodiment, the apparatus comprises a transmission unit according to claim 1.

In an embodiment according to the invention in the first aspect the frame is a Multi-Input Multi-Output (MIMO) frame. In a particular embodiment, the MIMO frame includes the packet and the another packet.

In an embodiment according to the invention in the first aspect the transmission unit is further configured to transmit by utilizing Orthogonal Frequency-Division Multiplexing (OFDM).

In an embodiment according to the invention in the first aspect the first part of the packet includes at least a preamble and the third part of the another packet includes at least a preamble and header.

In an embodiment according to the invention in the first aspect the quiet period gap includes at least one channel estimation symbol.

In an embodiment according to the invention in the first aspect the quiet period gap includes at least one quiet symbol.

In an embodiment according to the invention in the first aspect the first part of the packet includes at least a preamble and a header and the third part of the another packet is void of a preamble.

In an embodiment according to the invention in the first aspect the first part of the packet includes at least a preamble and the third part of the another packet includes at least a preamble.

In a second aspect, the invention encompasses a method including constructing a frame. The frame may include a packet including a first and second part, the first part separated from the second part by a gap; another packet including a third part, the third part aligned with at least a portion of the gap; and transmitting the frame. In comparison with a conventional method, at least one effect of the method of the invention in the second aspect is the mitigation of interference caused when two packets of a frame are transmitted on channels of a MIMO system.

In an embodiment according to the invention in the second aspect the transmitting transmits the frame at least in part by utilizing Orthogonal Frequency-Division Multiplexing (OFDM).

In an embodiment according to the invention in the second aspect the constructing constructs the first part of the packet to include at least a preamble and the third part of the another packet to include at least a preamble and header.

In an embodiment according to the invention in the second aspect the constructing constructs the gap to be a void.

In an embodiment according to the invention in the second aspect the constructing constructs the gap to include at least one quiet symbol.

In an embodiment according to the invention in the second aspect the constructing constructs the first part of the packet to include at least a preamble and a header and the third part of the another packet being void of a preamble.

In an embodiment according to the invention in the second aspect the constructing constructs the first part of the packet to include at least a preamble and the third part of the another packet to include at least a preamble.

In a third aspect, the invention encompasses a computer-readable media storing processor-executable instructions. When executed, the instructions cause one or more processors to perform operations that facilitate successful reception of frame via a communication medium, the operations comprising: receiving a Multi-Input Multi-Output (MIMO) frame, wherein the frame includes at least two packets, a first packet of the two packets including a preamble section followed by an gap and a second packet of the two packets including a section aligned with the gap of the first packet; and performing a channel measurement during at least a period defined by the gap. As compared to conventional instructions that perform operations, at least one effect of the invention in the third aspect is the mitigation of interference caused when two packets of a frame are received on channels of a MIMO system.

In an embodiment according to the invention in the third aspect a header section is subsequent to the preamble section and precedes the gap and the section aligned with the gap includes at least a preamble and a header.

In an embodiment according to the invention in the third aspect the performing performs an interference channel measurement on a first channel of the communication medium during a period delimited by the gap and further performs information channel measurement on a second channel of the communication medium during the period delimited by the gap.

In an embodiment according to the invention in the third aspect the receiving is performed at least in part by utilizing Orthogonal Frequency-Division Multiplexing (OFDM).

In an embodiment according to the invention in the third aspect the locating includes locating a transition other than the first transition of the multiple transitions.

In an embodiment according to the invention in the third aspect the gap is empty space.

In an embodiment according to the invention in the third aspect the gap includes at least one channel estimation symbol.

In an embodiment according to the invention in the third aspect the gap includes at least one quiet symbol.

This Summary is submitted with the understanding that it will not be used to interpret or limit the scope or meaning of the claims. This Summary is not intended to identify key features or essential features of the claimed subject matter, nor is it intended to be used as an aid in determining the scope of the claimed subject matter.

Following is a brief description of the drawings :
Fig. 1 illustrates a relevant portion of a typical data packet (including a preamble) used in multicarrier communications system, such as an Orthogonal Frequency-Division Multiplexing (OFDM) based system, that uses Single-Input Single-Output (SISO).
Fig. 2 illustrates a relevant portion of typical data packets (including a preamble) used in multicarrier communications system, such as an OFDM-based system, that uses Multi-Input Multi-Output (MIMO).
Fig. 3 illustrates a relevant portion of data packets (including a preamble) used in multicarrier communications system, such as an OFDM-based system, that uses MIMO, according to a first implementation.
Fig. 4 illustrates a relevant portion of data packets (including a preamble) used in multicarrier communications system, such as an OFDM-based system, that uses MIMO, according to a second implementation.
Fig. 5 illustrates a relevant portion of data packets used in multicarrier communications system, such as an OFDM-based system, that uses MIMO, according to a third implementation.
Fig. 6 illustrates a relevant portion of data packets used in multicarrier communications system, such as an OFDM-based system, that uses MIMO, according to a forth implementation.
Fig. 7 shows an exemplary networking communications arrangement in which one or more implementations of the techniques described herein may be employed.
Fig. 8 illustrates an exemplary network device configured to implement the techniques described herein.
Fig. 9 is a flowchart of a process that is configured to implement the implementations described herein.

The following detailed description references the accompanying figures that are briefly described above. In the figures, the left-most digit(s) of a reference number identifies the figure in which the reference number first appears. The same numbers are used throughout the drawings to reference like features and components. Also, note that any text smaller than ten point is presented merely to indict where text would appear in the depicted figures. Since such text is merely an indicator of where text might appear, the content of such text is unimportant to the understanding the implementations depicted.

Described herein are implementations related to data communication using a frame that includes at least two data packets. One of the data packets includes a preamble that is separated from a payload by a gap (e.g., an intra-frame gap), void or empty space. Another of the data packets includes a preamble that is aligned with the gap (e.g., an intra-frame gap), void or empty space. A receiver of the frame may perform channel measurements during the gap (e.g., an intra-frame gap), void or empty space.

The described implementations are particularly useful in systems that employ Multi-Input Multi-Output (MIMO). In particular, the various frame implementations described herein enable a receiver of an implementation specific frame to reliably execute communication and interference measurements on the channels of a MIMO system. In addition, the frames implemented by the described implementations are compatible with Single-Input Single-Output (SISO) systems, support various MIMO schemes, e.g., space time diversity and spatial multiplexing, and enable simplified transceiver design.

### EXEMPLARY IMPLEMENTATION AND OPERATION

An Orthogonal Frequency-Division Multiplexing (OFDM) is used as a digital multi-carrier modulation approach for various communications media. OFDM-based networking/transmission systems utilize multiple subcarriers to transport information from one particular node to another. OFDM is sometimes referred to as multi-carrier or discrete multi-tone modulation. An OFDM-based system divides a highspeed serial information signal into multiple lower-speed sub-signals that the system transmits simultaneously at different frequencies in parallel.

The approach is orthogonal because of the spacing which prevents the demodulators from seeing frequencies other than their own. The benefits of OFDM are high spectral efficiency, resiliency to RF interference, and lower multi-path distortion. This is useful because in a typical terrestrial broadcasting scenario there are multipath-channels (i.e., the transmitted signal arrives at the receiver using various paths of different length).

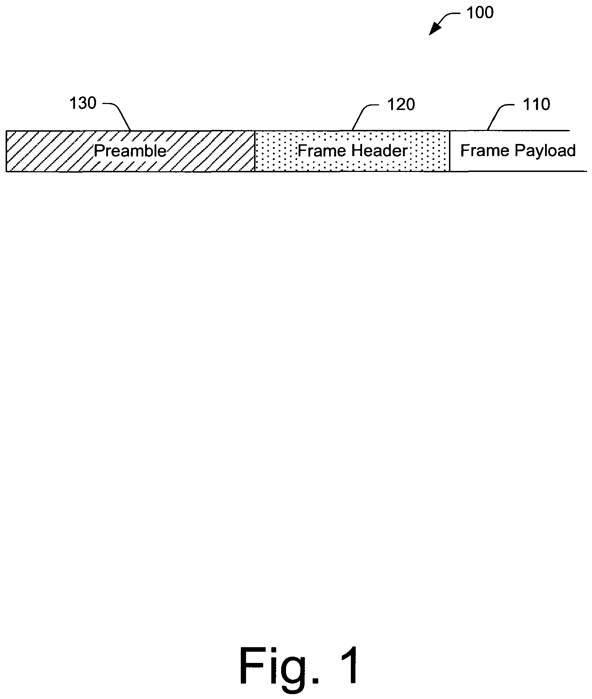

Fig. 1 illustrates a relevant portion of a typical data packet 100 used in an OFDM-based system that uses SISO. The data packet 100 includes a frame that includes its payload 110 with a header 120. A preamble 130 is prepended to or associated with the frame.

The preamble 130 is the first part of the frame, and intended so that the receiver can detect the presence of the frame on the medium, adjust the gain of Analog Front End (AFE), and synchronize the clock. The header 120 carries necessary information for the receiver to address, demodulate, and decode the payload 110.

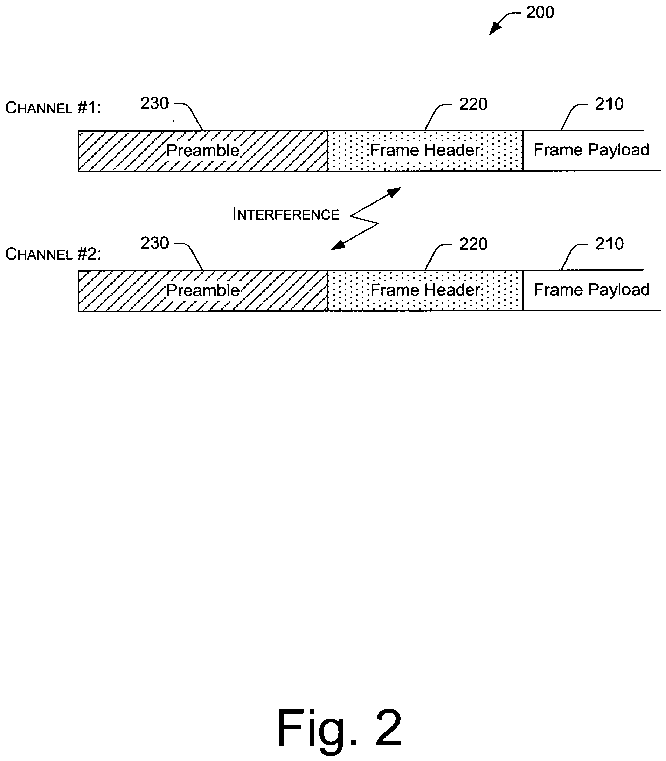

Fig. 2 illustrates a relevant portion of typical data packets 200 used in an OFDM-based system that uses MIMO. In this disclosure, multiple data packets, such as data packets 200, may be referred to as a MIMO frame or simply a frame. The channel #1 data packet includes a frame that includes a payload 210 with a header 220. A preamble 230 is prepended to or associated with the frame. Similarly, the channel #2 data packet includes a frame that includes its payload 210 with a header 220. A preamble 230 is prepended to or associated with the frame.

The preamble 230 is the first part of the frame, and intended so that the receiver can detect the presence of the frame on the medium, adjust the gain of the AFE, and synchronize the clock. The header 220 carries necessary information for the receiver to address, demodulate, and decode the payload 210.

In a MIMO system, the MIMO frame includes at least two data packets or frames that are transmitted simultaneously over two channels (e.g., channel #1 and #2). As indicated previously herein, the present disclosure generally describes MIMO frames that include two data packets. However, the described MIMO frames may also be implemented with more than two data packets in order to accommodate more than two channels.

In order to enhance transmission reliability, identical, or slightly modified (e.g., same data with different modulation) frames may be transmitted simultaneously over two channels. Alternatively, in order to increase data rate, two different frames carrying different payloads may be transmitted over two channels. The first approach is often referred to as space time diversity while the latter is referred to as spatial multiplexing.

Unfortunately, because the two channels are not perfectly orthogonal, transmission in one channel may interfere with transmission in another channel. The mutual interference may cause degradation of Virtual Carrier Sense (VCS) capability of SISO system - e.g., the decoding quality of MIMO frames at SISO receivers may be degraded. Furthermore, the mutual interference may cause decoding degradation of MIMO frames received by a MIMO receiver.

Implementations described herein provide coordinated MIMO frame structures. The implementations consider at least the following scenarios:
- MIMO frames that are intended to be received by a MIMO receiver.
- MIMO frames intended for different receivers, where such receivers may be SISO, SISO with interference cancellation capability, or MIMO.

Moreover, the MIMO frames according to various implementations described herein provide:
- Uncomplicated measurement of communication (**H**₁₁, **H**₂₂) and interference (**H**₁₂, **H**₂₁) channels, where **H**_{ab} denotes the channel measured from the transmitter at channel "a" to the receiver at channel "b".
- Backward compatibility with SISO systems with substantially no performance degradation.
- Support of different MIMO schemes, e.g., space time diversity and spatial multiplexing with the same structure.
- Receiver processing time that leads to simplification of receiver design.

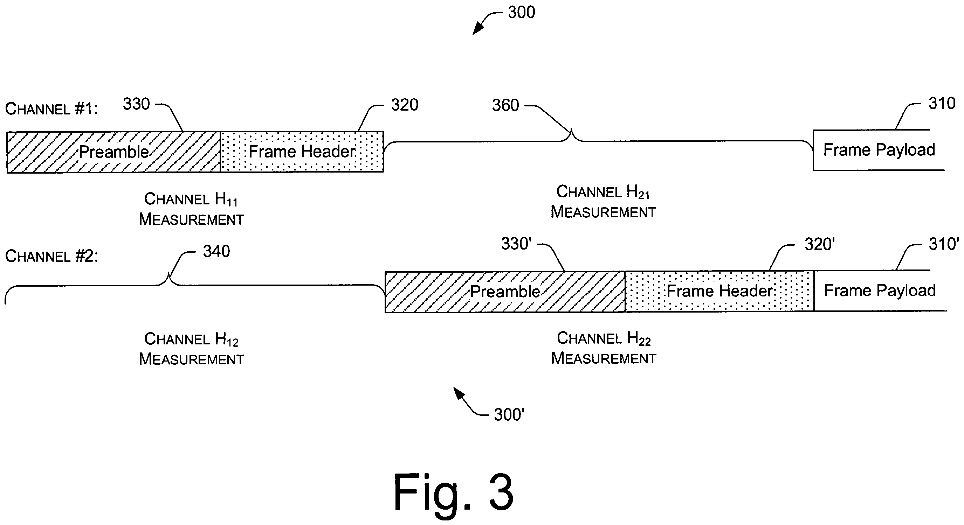

Fig. 3 illustrates a relevant portion of data packets 300 and 300' used in an OFDM-based system that uses MIMO, in accordance with a first implementation. The channel #1 data packet 300 includes a frame that includes a payload 310 with a header 320. A preamble 330 is prepended to or associated with the frame. Similarly, the channel #2 data packet 300' includes a frame that includes its payload 310' with a header 320'. A preamble 330' is prepended to or associated with the frame.

The transceiver originating the data packets 300 and 300' delays, for some quiet time duration, as defined by a gap, void or empty space, transmitting preamble 330' and header 320' for channel #2, as shown by bracket 340. That is, preamble 330 and header 320 for channel #1 are transmitted first on channel #1 while channel #2 is quiet. During this quiet time, the MIMO receiver may measure channel **H**₁₁ and **H**₁₂. Subsequently, preamble 330' and header 320' for channel #2 are transmitted while channel #1 is quiet, as defined by a gap, void or empty space, as shown by bracket 360. During this time, the MIMO receiver may measure channel **H**₂₂ and **H**₂₁.

The foregoing first implementation allows nodes in the domain, regardless of SISO or MIMO, to detect a MIMO frame accurately because preambles and headers are transmitted while other channels are quiet. Moreover, the scheme increases the detection probability of the MIMO frame at other nodes, since preambles and headers are transmitted twice on different channels.

In one implementation, the header 320 for channel #1 may include one or more bits that indicate that channel #2 is enabled. Also, the header 320' for channel #2 may include one or more bits that indicate that channel #1 is enabled. In addition, the channel #1 and #2 headers 320 and 320', respectively, may include duration information.

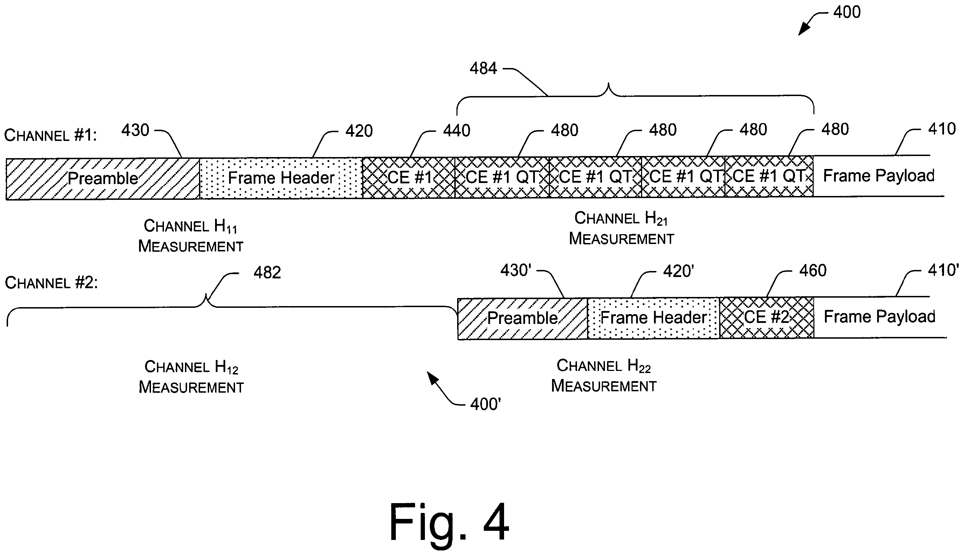

Fig. 4 illustrates a relevant portion of data packets 400 and 400' used in an OFDM-based system that uses MIMO, in accordance with a second implementation. The channel #1 data packet includes a frame that includes a payload 410 with a header 420. A preamble 430 is prepended to or associated with the frame. Similarly, the channel #2 data packet includes a frame that includes its payload 410' with a header 420'. A preamble 430' is prepended to or associated with the frame.

It may be possible to add one or more channel estimation (CE) symbols after each header to facilitate enhanced channel estimation and to enable the receiver to have additional time to process the MIMO frame. For example, in Fig. 4, a CE #1 440 is added after the header 420 for channel #1, and a CE #2 460 is added after the header 420' for channel #2. The type and/or number of CE symbols may be controlled by each header 420 and 420', independently, via fields in the header 420 and 420', respectively.

In addition, it is possible to add one or more CE # 1 quiet symbols (QT) 480 after the CE #1 440. Each CE #1 QT 480 may be considered as another form of channel estimation symbol, and any combination of different CE symbol types can be inserted between the header and the payload.

The transceiver originating the data packets 400 and 400' delays, for some quiet time duration, as defined by a gap, void or empty space, transmitting preamble 430' and header 420' for channel #2. That is, preamble 430, header 420 and CE #1 440 for channel #1 are transmitted first on channel #1 while channel #2 is quiet, which is denoted by bracket 482. During this quiet time, the receiver may measure channel **H**₁₁ and **H**₁₂. Subsequently, preamble 430', header 420' and CE #2 460 for channel #2 are transmitted while channel #1 is quiet. In this implementation, the delay is denoted by bracket 484, and substantially the entire delay period includes the CE #1 QTs 480 in a gap, void or empty space. During this quiet time, the receiver may measure channel **H**₂₂ and **H**₂₁.

The foregoing second implementation allows nodes in the domain, regardless of SISO or MIMO, to detect a MIMO frame accurately because preambles and headers are transmitted while other channels are quiet. Moreover, the scheme increases the detection probability of the MIMO frame at other nodes, since preambles and headers are transmitted twice on different channels.

In one implementation, the header 420 for channel #1 may include one or more bits that indicate that channel #2 is enabled. Also, the header 420' for channel #2 may include one or more bits that indicate that channel #1 is enabled. In addition, the channel #1 and #2 headers 420 and 420', respectively, may include duration information and information that indicates the inclusion of CE symbol(s) and the type of CE symbol(s).

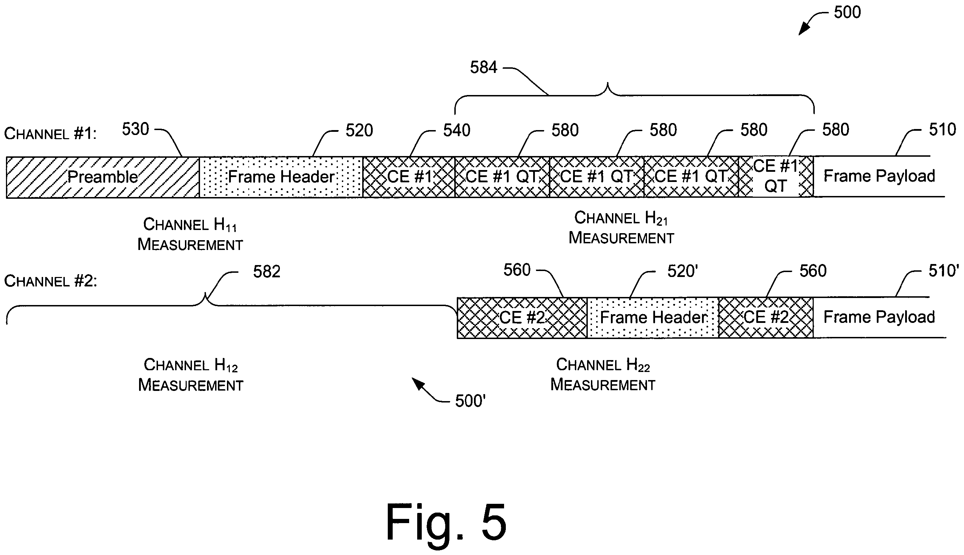

Fig. 5 illustrates a relevant portion of data packets 500 and 500' used in an OFDM-based system that uses MIMO, in accordance with a third implementation. In this implementation, for example, the MIMO frame is for transmission to a MIMO receiver. The channel #1 data packet 500 includes a frame that includes a payload 510 with a header 520. A preamble 530 is prepended to or associated with the frame. Similarly, the channel #2 data packet 500' includes a frame that includes its payload 510' with a header 520'. In this implementation, the channel #2 does not include a preamble; a CE #2 560 (described in the following) is used in place of the preamble.

It may be possible to add one or more channel estimation (CE) symbols after each header to facilitate enhanced channel estimation and to enable the receiver to have additional time to process the MIMO frame. For example, in Fig. 5, a CE #1 540 is added after the header 520 for channel #1, and a CE #2 560 is added after the header 520' for channel #2. The type and/or number of CE symbols may be controlled by each header 520 and 520', independently, via fields in the header 520 and 520', respectively.

In addition, it is possible to add one or more CE # 1 quiet symbols (QT) 580 after the CE #1 540, within a gap, void or empty space. Each CE #1 QT 580 may be considered as another form of channel estimation symbol, and any combination of different CE symbol types can be inserted between the header and the payload.

The transceiver originating the data packets 500, 500' delays, for some quiet time duration, as defined by a gap, void or empty space, transmitting CEs #2 560 and header 520' for channel #2. That is, preamble 530, header 520 and CE #1 540 for channel #1 are transmitted first on channel #1 while channel #2 is quiet, which is denoted by bracket 582 and defined by a gap, void or empty space. During this quiet time, the MIMO receiver may measure channel **H**₁₁ and **H**₁₂. Subsequently, CE #2 560, header 520' and CE #2 560 for channel #2 are transmitted while channel #1 is quiet. In this implementation, the delay is denoted by bracket 584, and substantially the entire delay period includes the CE #1 QTs 580 within a gap, void or empty space. During this quiet time, the MIMO receiver may measure channel **H**₂₂ and **H**₂₁.

The foregoing third implementation allow at least one node in the domain to detect a MIMO frame accurately because portions of data packets are transmitted while other channels are quiet. Moreover, the scheme increases the detection probability of the MIMO frame at other nodes, since at least the headers are transmitted twice on different channels.

In one implementation, the header 520 for channel #1 may include one or more bits that indicate that channel #2 is enabled. Also, the header 520' for channel #2 may include one or more bits that indicate that channel #1 is enabled. In addition, the channel #1 and #2 headers 520 and 520', respectively, may include duration information and information that indicates the inclusion of CE symbol(s) and the type of CE symbol(s).

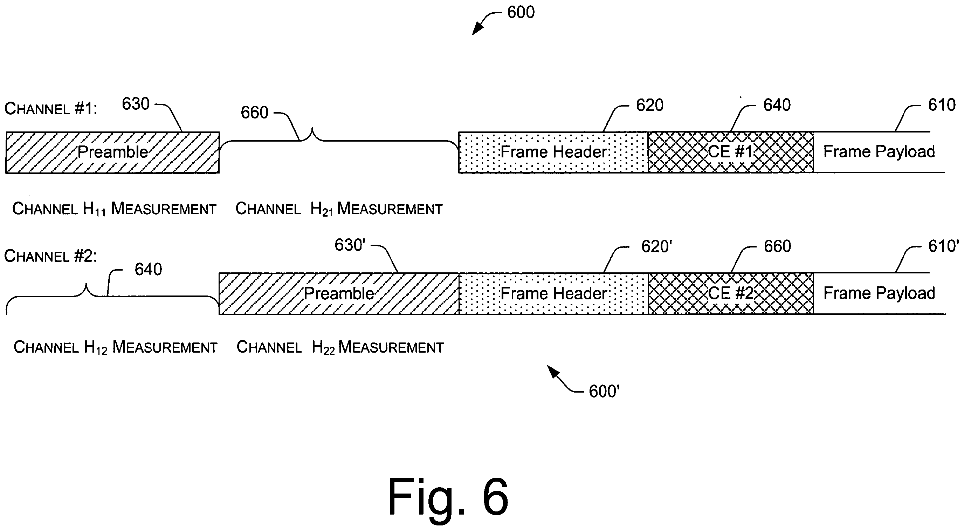

Fig. 6 illustrates a relevant portion of data packets 600 and 600' used in an OFDM-based system that uses MIMO, in accordance with a forth implementation. In this implementation, for example, the MIMO frame is for transmission to one or more MIMO receivers. The channel #1 data packet 600 includes a frame that includes a payload 610 with a header 620. A CE #1 640 is between the header 620 and the payload 610. A preamble 630 is associated with the frame. Similarly, the channel #2 data packet 600' includes a frame that includes its payload 610' with a header 620'. A CE #2 660 is between the header 620' and the payload 610'. A preamble 630 is associated with the frame.

The transceiver originating the data packets 600 delays, for some quiet time duration, as defined by a gap, void or empty space, transmitting preamble 630', header 620' and CE #2 660 for channel #2, as shown by bracket 640. That is, preamble 630 for channel #1 is transmitted first on channel #1 while channel #2 is quiet. During this quiet time, the MIMO receiver may measure channel **H**₁₁ and **H**₁₂. Subsequently, preamble 630' is transmitted while channel #1 is quiet, as defined by a gap, void or empty space, as shown by bracket 660. During this time, the MIMO receiver may measure channel **H**₂₂ and **H**₂₁.

The foregoing forth implementation allows nodes in the domain to detect a MIMO frame accurately because preambles are transmitted while other channels are quiet. Moreover, the scheme increases the detection probability of the MIMO frame at other nodes, since preambles and headers are transmitted twice on different channels.

In one implementation, the header 620 for channel #1 may include one or more bits that indicate that channel #2 is enabled. Also, the header 620 for channel #2 may include one or more bits that indicate that channel #1 is enabled. In addition, the channel #1 and #2 headers 620 and 620', respectively, may include duration information and further information indicating the type and number of implemented CEs.

In alternative implementations, the use of orthogonal signaling in preambles of two or channels may be beneficial to achieve better efficiency. That is, a preamble for a channel #1 and a preamble for a channel #2 may be transmitted concurrently, but the preambles are constructed so that they are orthogonal. The headers for the channels #1 and #2 may also be transmitted concurrently. Furthermore, each data packet of the MIMO frame may include a CE QT and a CE. For example. a first data packet of a MIMO frame may include a preamble, a header, a CE QT, CE and payload, and a second packet of the MIMO frame may include a preamble, header, CE, CE QT and payload. The first and second data packets of the MIMO frame may be transmitted concurrently.

Moreover, in one or more implementations, the header information to decode a MIMO frame (e.g., payload) is split into the channel #1 header and the channel #2. However, in one or more implementations, this split is not necessary. Depending on the use case or supporting application, the header information may be carried on the channel #1 header or the channel #2 header, removed entirely, or unevenly split between the channel #1 header or the channel #2 header.

### EXEMPLARY NETWORK COMMUNICATIONS ARRANGEMENT

An exemplary communication arrangement may employ at least two multicarrier apparatuses or nodes. The exemplary communication arrangement may also employ a multicarrier controller apparatus or controller node. In one implementation, the multicarrier apparatuses/controller are OFDM apparatuses capable of implementing the herein described techniques and implementations. In another implementation, the exemplary communication arrangement employs apparatuses or nodes that communicate via a wired/wireless medium by way of one or more communication protocols.

The multicarrier apparatuses may communicate through a communication channel. The communication channel may be realized as one or more wireless communication media, one or more wireline communication media (e.g., coaxial cable, twisted pair of copper wires, powerline wiring, Ethernet cabling, optical fiber, etc.), or combinations thereof. Accordingly, the multicarrier apparatuses may include structure and functionality that enable signal communication over such media. Such structure and functionality may include one or more antennas, integrated wireline interfaces, and the like. Such structure and functionality may employ multiple differing wireline media (e.g., coaxial cable and powerline wiring). Depending on the implementation, the multicarrier apparatuses may communicate with one another directly (peer-to-peer mode) or the multicarrier apparatuses may communicate via the controller apparatus. The multicarrier apparatuses may be SISO and/or MIMO capable devices.

A family of networking standards called G.hn has been proposed by the International Telecommunication Union's Standardization arm (ITU-T) and promoted by the HomeGrid Forum. One or more of the G.hn specifications define networking over both wireline (e.g., powerlines, phone lines and coaxial cables) and wireless networks. The G.hn specifications specify standards by which multicarrier apparatuses may communicate via such communications channels. The techniques described herein may be employed with those G.hn specifications or other specifications.

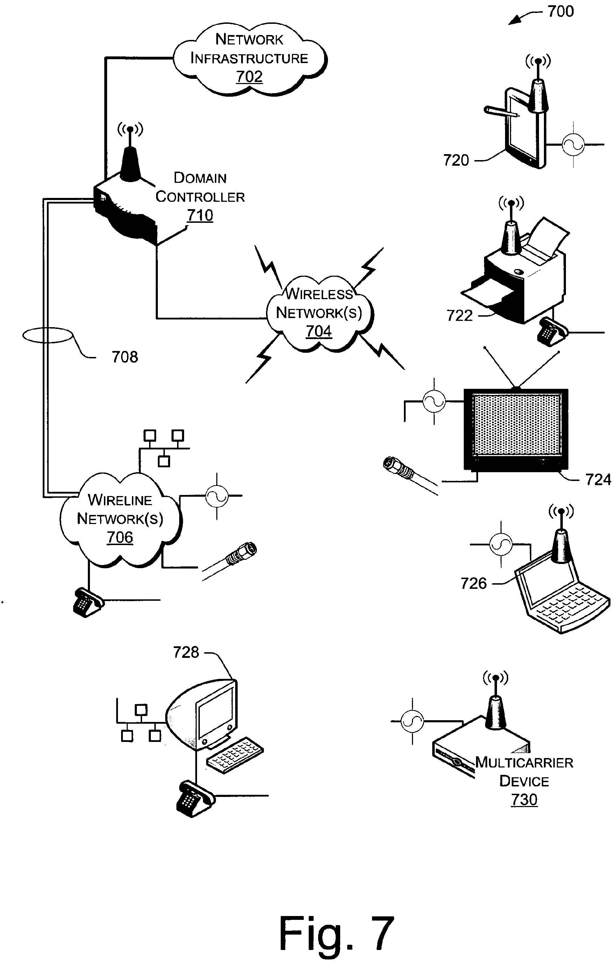

Fig. 7 shows an exemplary networking communications arrangement 700 in which one or more implementations may be employed. The multicarrier controller apparatus of the arrangement 700 is an access point 710 of a home networking environment. As shown in Fig. 7, the access point 710 may be a residential gateway that distributes broadband services from a connected network infrastructure 702 (e.g., the Internet) to various multicarrier apparatuses via one or more wireless networks 704 and one or more wireline networks 706. The wireless networks 704 may also be called wireless local area networks (WLAN) and the wireline networks 706 may be called local area networks (LANs).

The various multicarrier apparatuses depicted in Fig. 7 include a tablet computer 720, a network printer 722, a television 724, a laptop computer 726, a desktop computer 728, and a generic multicarrier apparatus or device 730 (e.g., a digital video recorder (DVR) and Internet TV device). The multicarrier apparatuses may be associated with digital content destinations in the home, but may also be associated with digital content sources, such as digital video recorders (DVR), computers providing streaming video, televisions, entertainment centers, and the like.

As depicted, the tablet computer 720 is configured to communicate via both wireless and powerline wireline networks, the network printer 722 is configured to communicate via wireless and/or twisted-pair cabling (e.g., telephone wiring) based wireline networks, the television 724 is configured to communicate via either of two different wireline networks (e.g., coaxial cabling and/or powerline cabling based), the laptop computer 726 communicates via powerline based wireline and/or wireless networks, and the desktop computer 728 is configured to communicate via an Ethernet cabling based wireline network and/or twisted-pair cabling (e.g., telephone wiring) based wireline networks. Similarly, the multicarrier device 730 is configured to communicate via wireless and/or powerline-based wireline networks. As depicted, the wireline networks 706 include one or more wireline networks based upon Ethernet cabling (e.g., Cat-5), powerline wiring, coaxial cabling, and/or telephone cabling. As represented by multiple wire connections 706, the domain controller 710 is connected via multiple different wirings to the multiple different wireline networks 706.

Furthermore, the multicarrier apparatuses may be enabled to communicate using packet-based technology (e.g., ITU G.hn, HomePNA, HomePlug® AV and Multimedia over Coax Alliance (MoCA)) and xDSL technology). Such xDSL technology may include Asymmetric Digital Subscriber Line (ADSL), ADSL2, ADSL2+, Very high speed DSL (VDSL), VDSL2, G.Lite, and High bit-rate Digital Subscriber Line (HDSL). In addition, some multicarrier apparatuses (e.g., 720, 722, 726, and 730) may be enabled to communicate using IEEE 802.11 and IEEE 802.16 (WiMAX) wireless technologies.

Signals exchanged between the multicarrier apparatuses may include multicarrier symbols that each include a plurality of tones or sub-channels. Each of the tones within a multicarrier symbol may have data bits modulated thereon that are intended for delivery from one of the multicarrier apparatuses to another.

### EXEMPLARY NETWORK DEVICE EMPLOYING ROBUST PREAMBLE TECHNIQUES

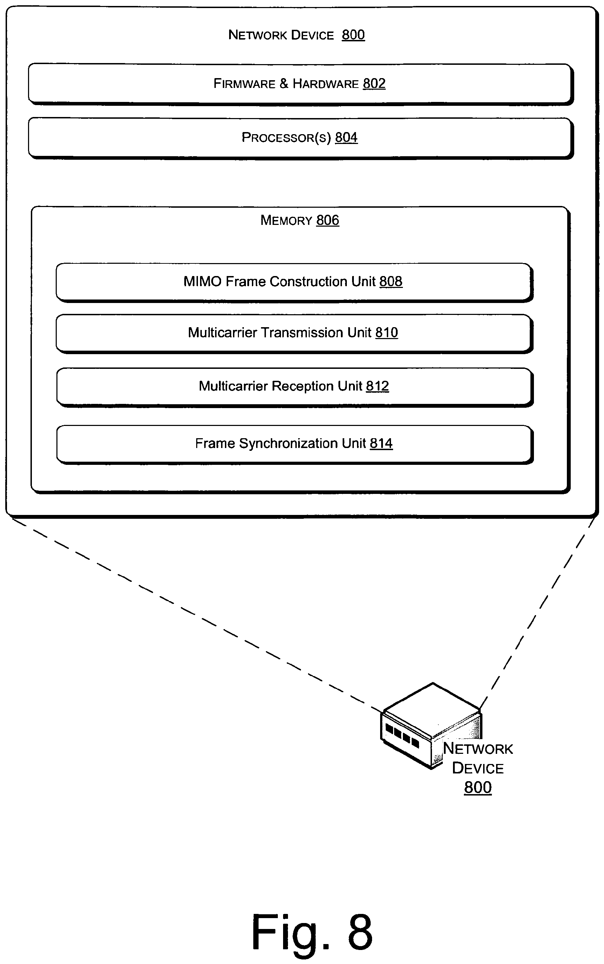

Fig. 8 shows an exemplary network device 800 configured to employ the implementations described herein. The network device 800 may be, for example, a network controller, a multicarrier controller apparatus (such as the access point 710 in Fig. 7), and/or a multicarrier apparatus (such as 720-730 of Fig. 7).

The network device 800 is depicted, in Fig. 8, in an expanded view to better show some of the relevant components therein. The network device 800 may include firmware & hardware 802, one or more processors 804, and a memory 806. The network device 800 has one or more modules of processor-executable instructions stored in the memory 806. The network device 800 may include a preamble construction unit 808, a multicarrier transmission unit 810, a multicarrier reception unit 812, and a frame synchronization unit 814.

The MIMO frame construction unit 808 constructs a MIMO frame, at least in part, in accordance with one or more of the implementations described herein. When constructed, the MIMO frame may have at least two at least two data packets for transmission to one or more receivers.

The multicarrier transmission unit 810 is configured to transmit the MIMO frame over a communications medium. That communication medium may be a communication medium, such as a powerline. An OFDM transceiver is an example of a suitable device for the multicarrier transmission unit 810.

The multicarrier reception unit 812, such as the OFDM transceiver, receives a MIMO frame having a structure in accordance with at least one implementation described herein and via a communications medium, such as powerline.

The frame synchronization unit 814 monitors the incoming preambles of a MIMO frame. Based upon one or more preambles, the unit 814 calculates/predicts when the frame will start. The reception unit 812 can begin receiving the frame at the predicted time.

While the network device 800 is described herein in terms of modules and sub-modules of processor-executable instructions, the functionalities of these modules and sub-modules may be implemented in software, hardware, firmware, or a combination thereof.

### EXEMPLARY PROCESSES

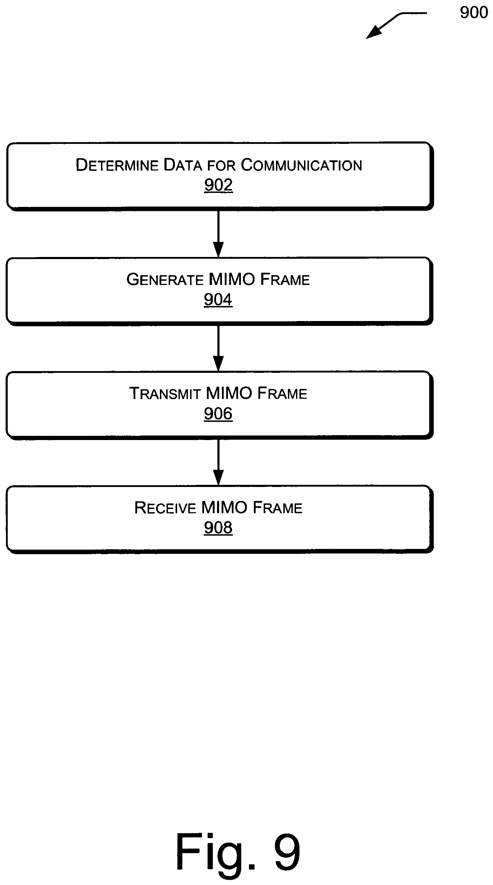

Fig. 9 is a flowchart illustrating an exemplary process 900 that implements the implementations described herein. The exemplary process 900 may be performed, at least in part, by a networking device such as a multicarrier controller apparatus (e.g., the domain controller 710 or television 724 of Fig. 7), a multicarrier apparatus (e.g., the device 730 of Fig. 7), and/or network device 800 of Fig. 8. Operation of the process 900 may reference previously introduced elements and description related to the drawing figures, such as Figs. 1-8.

Fig. 9 includes process 900, which generates a MIMO frame in accordance with the implementations described herein. Typically, this process 900 is performed by a network device performing a multicarrier transmission over a communication medium, such as powerline.

At 902, the process 900 begins with determining that data are for communication to a receiver, such as a multicarrier device (e.g., network device 800).

At 904, the multicarrier device generates a MIMO frame in accordance with one of the implementations described herein. For example, the MIMO frame may generated as illustrated in Figs. 3-6.

At 906, the multicarrier device transmits the MIMO frame generated at block 904 on a communication medium, such as powerline.

At 908, a multicarrier device receives the MIMO frame via the communication medium.

### ADDITIONAL AND ALTERNATIVE IMPLEMENTATION NOTES

Exemplary implementations discussed herein may have various components collocated; however, it is to be appreciated that the various components of the arrangement may be located at distant portions of a distributed network, such as a communications network and/or the Internet, or within a dedicated secure, unsecured and/or encrypted arrangement. Thus, it should be appreciated that the components of the arrangements may be combined into one or more apparatuses or collocated on a particular node of a distributed network, such as a telecommunications network. Moreover, it should be understood that the components of the described arrangements may be arranged at any location within a distributed network without affecting the operation of the arrangements. Similarly, one or more functional portions of the arrangement may be distributed between a modem and an associated computing device.

The above-described implementations, arrangements, apparatuses and methods may be implemented in firmware, hardware, software, one or more software modules, one or more software and/or hardware testing modules, one or more telecommunications test devices, one or more DSL modems, one or more ADSL modems, one or more xDSL modems, one or more VDSL modems, one or more linecards, one or more G.hn transceivers, one or more MOCA transceivers, one or more Homeplug transceivers, one or more powerline modems, one or more wired or wireless modems, test equipment, one or more multicarrier transceivers, one or more wired and/or wireless wide/local area network systems, one or more satellite communication systems, network-based communication systems (such as an IP, Ethernet or ATM system), one or more modems equipped with diagnostic capabilities, or the like, or on one or more separate programmed general purpose computers having a communications device or in conjunction with any of the following communications protocols: CDSL, ADSL2, ADSL2+, VDSL1, VDSL2, HDSL, DSL Lite, IDSL, RADSL, SDSL, UDSL, MOCA, G.hn, Homeplug or the like.

Additionally, the implementations, arrangements, procedures and protocols of the described implementations may be implemented on a special purpose computer, a programmed microprocessor or microcontroller and peripheral integrated circuit element(s), an ASIC or other integrated circuit, a digital signal processor, a flashable device, a hard-wired electronic or logic circuit such as discrete element circuit, a programmable logic device such as PLD, PLA, FPGA, PAL, a modem, a transmitter/receiver, any comparable device, or the like. In general, any apparatus capable of implementing a state machine that is in turn capable of implementing the methodology described and illustrated herein may be used to implement the various communication methods, protocols and techniques according to the implementations.

Furthermore, the disclosed implementations and procedures may be readily implemented in software using object or object-oriented software development environments that provide a portable source code that can be used on a variety of computer or workstation platforms. Alternatively, the disclosed arrangements may be implemented partially or fully in hardware using standard logic circuits or VLSI design. The communication arrangements, procedures and protocols described and illustrated herein may be readily implemented in hardware and/or software using any known or later developed systems or structures, devices and/or software by those of ordinary skill in the applicable art from the functional description provided herein and with a general basic knowledge of the computer and telecommunications arts.

Moreover, the disclosed procedures may be readily implemented in software that can be stored on a computer-readable storage medium, executed on a programmed general-purpose computer with the cooperation of a controller and memory, a special purpose computer, a microprocessor, or the like. In these instances, the arrangements and procedures of the described implementations may be implemented as a program embedded on a personal computer such as an applet, JAVA® or CGI script, as a resource residing on a server or computer workstation, as a routine embedded in a dedicated communication arrangement or arrangement component, or the like. The arrangements may also be implemented by physically incorporating the arrangements and/or procedures into a software and/or hardware system.

The implementations herein are described in terms of exemplary embodiments. However, it should be appreciated that individual aspects of the implantations may be separately claimed and one or more of the features of the various embodiments may be combined. In the above description of exemplary implementations, for purposes of explanation, specific numbers, materials configurations, and other details are set forth in order to better explain the invention, as claimed. However, it will be apparent to one skilled in the art that the claimed invention may be practiced using different details than the exemplary ones described herein. In other instances, well-known features are omitted or simplified to clarify the description of the exemplary implementations.

The inventors intend the described exemplary implementations to be primarily examples. The inventors do not intend these exemplary implementations to limit the scope of the appended claims. Rather, the inventors have contemplated that the claimed invention might also be embodied and implemented in other ways, in conjunction with other present or future technologies.

Moreover, the word "exemplary" is used herein to mean serving as an example, instance, or illustration. Any aspect or design described herein as "exemplary" is not necessarily to be construed as preferred or advantageous over other aspects or designs. Rather, use of the word exemplary is intended to present concepts and techniques in a concrete fashion. The term "techniques," for instance, may refer to one or more devices, apparatuses, systems, methods, articles of manufacture, and/or computer-readable instructions as indicated by the context described herein.

As used in this application, the term "or" is intended to mean an inclusive "or" rather than an exclusive "or." That is, unless specified otherwise or clear from context, "X employs A or B" is intended to mean any of the natural inclusive permutations. That is, if X employs A; X employs B; or X employs both A and B, then "X employs A or B" is satisfied under any of the foregoing instances. In addition, the articles "a" and "an" as used in this application and the appended claims should generally be construed to mean "one or more," unless specified otherwise or clear from context to be directed to a singular form.

The exemplary processes discussed herein are illustrated as a collection of blocks in a logical flow graph, which represents a sequence of operations that can be implemented with hardware, software, firmware, or some combination thereof. In the context of software/firmware, the blocks represent instructions stored on one or more processor-readable storage media that, when executed by one or more processors, perform the recited operations. The operations of the exemplary processes may be rendered in virtually any programming language or environment including (by way of example and not limitation): C/C++, Fortran, COBOL, PASCAL, assembly language, markup languages (e.g., HTML, SGML, XML, VoXML), and the like, as well as object-oriented environments such as the Common Object Request Broker Architecture (CORBA), Java™ (including J2ME, Java Beans, etc.), Binary Runtime Environment (BREW), and the like. Moreover, the described implementations may be similarly executed and realized by way of such hardware, software, firmware, or some combination thereof.

Note that the order in which the implementations and processes are described is not intended to be construed as a limitation, and any number of the described implementations and processes may be combined.

The term "processor-readable media" includes processor-storage media. For example, processor-storage media may include, but are not limited to, magnetic storage devices (e.g., hard disk, floppy disk, and magnetic strips), optical disks (e.g., compact disk (CD) and digital versatile disk (DVD)), smart cards, flash memory devices (e.g., thumb drive, stick, key drive, and SD cards), and volatile and non-volatile memory (e.g., random access memory (RAM), read-only memory (ROM)). For the purposes of this disclosure and the claims that follow, the terms "coupled" and "connected" may have been used to describe how various elements interface. Such described interfacing of various elements may be either direct or indirect.

## Claims

1. A method comprising:
constructing a frame including:
a packet (400) including a first part (430, 420) and a second part (410), the first part (430, 420) separated from the second part (410) by a gap, wherein the gap includes at least one symbol (480) of a group comprising a channel estimation symbol and a quiet symbol; another packet (400') including a third part (420', 430'), wherein a beginning of the third part (420', 430') is aligned with one of a group consisting of a beginning of the gap and the beginning of the quiet symbol (480); wherein the another packet is sent on a different channel than the packet; and
transmitting the frame.

2. The method according to claim 1, wherein the constructing includes constructing a Multi-Input Multi-Output, MIMO, frame including the packet (400) and the another packet (400').

3. The method according to claim 1 or 2, wherein the transmitting includes transmitting the frame at least in part by utilizing Orthogonal Frequency-Division Multiplexing.

4. The method according to any of the preceding claims, wherein the constructing includes constructing the first part of the packet (400) to include a preamble (430) and the third part of the another packet (400') to include a preamble (430') and header (420').

5. The method according to any of the preceding claims, wherein the constructing includes constructing the gap to be a void (360).

6. The method according to any of the preceding claims, wherein the constructing includes constructing the gap (484) to include a quiet symbol (480).

7. The method according to any of the preceding claims, wherein the constructing includes constructing the first part of the packet (500) to include a preamble (530) and a header (520) and the third part of the another packet (500') being void of a preamble.

8. The method according to claim 1, wherein the another packet (500') includes a fourth part (510'), the third part (530, 520) being separated from the fourth part (510) by another gap, wherein the beginning of the fourth part (510') is aligned to the beginning of the second part (510).

9. An apparatus comprising:
a frame construction unit configured to construct a frame including:
a packet (400) including a first and second part, the first part (420, 430) separated from the second part (410) by a quiet period gap; and
another packet (400') including a third part (420', 430'); the apparatus being configured to send the another packet on a different channel than the packet;
**characterised in that** the frame construction unit is configured to add, in the gap, at least one symbol (480) of a group comprising a channel estimation symbol and a quiet symbol, and **in that** a beginning of the third part (420', 430') is aligned with one of a group consisting of a beginning of the gap and the beginning of the quiet symbol (480).

10. The apparatus according to claim 9, **characterized in that** the apparatus comprises means to carry out the steps of the method of any of claims 2 to 8.

11. A computer-readable medium comprising processor-executable instruction code adapted to carry out, when run on one or more processors, operations that facilitate successful reception of frame via a communication medium, the operations comprising:
receiving a Multi-Input Multi-Output, MIMO, frame, wherein the frame includes at least two packets (400, 400'), a first packet (400) of the two packets (400, 400') including a preamble section (430) followed by a gap and a second packet (400') of the two packets (400, 400') including a section (430'); the second packet being received on a different channel than the first packet; and
performing a channel measurement during at least a period defined by the gap;
**characterised in that** the gap includes at least one symbol (480) of a group comprising a channel estimation symbol and a quiet symbol, wherein a beginning of the section (430') included in the second packet (400') is aligned with one of a group consisting of a beginning of the gap and the beginning of the quiet symbol (480).

12. A computer-readable medium comprising processor-executable instruction code adapted to carry out, when run on one or more processors, a method according to any of claims 3 to 8.

13. The computer-readable medium of claim 11 or 12, wherein a header section (420) is subsequent to the preamble section (430) and precedes the gap and the section included in the second packet (400') includes at least a preamble and a header (430', 420').

14. The computer-readable medium according to any of claims 11 to 13, wherein the performing includes an interference channel measurement on a first channel of the communication medium during a period delimited by the gap and further includes information channel measurement on a second channel of the communication medium during the period delimited by the gap.

## Patentansprüche

1. Verfahren, das Folgendes umfasst:
Konstruieren eines Rahmens, der Folgendes enthält:
ein Paket (400), das einen ersten Teil (430, 420) und einen zweiten Teil (410) enthält, wobei der erste Teil (430, 420) von dem zweiten Teil (410) durch eine Lücke getrennt ist, wobei die Lücke mindestens ein Symbol (480) einer Gruppe enthält, die ein Kanalschätzsymbol und ein Ruhesymbol umfasst; ein weiteres Paket (400'), das einen dritten Teil (420', 430') enthält, wobei ein Anfang des dritten Teils (420', 430') auf einen einer Gruppe ausgerichtet ist, die aus einem Anfang der Lücke und dem Anfang des Ruhesymbols (480) besteht; wobei das weitere Paket auf einem anderen Kanal als das Paket gesendet wird; und Senden des Rahmens.

2. Verfahren nach Anspruch 1, wobei das Konstruieren enthält, einen Mehrfacheingang-Mehrfachausgang-Rahmen, MIMO-Rahmen, zu konstruieren, der das Paket (400) und das weitere Paket (400') enthält.

3. Verfahren nach Anspruch 1 oder 2, wobei das Senden enthält, den Rahmen zumindest teilweise durch Verwenden eines Orthogonalfrequenzmultiplexverfahrens zu senden.

4. Verfahren nach einem der vorhergehenden Ansprüche, wobei das Konstruieren enthält, den ersten Teil des Pakets (400) so zu konstruieren, dass er eine Präambel (430) enthält, und den dritten Teil des weiteren Pakets (400') so zu konstruieren, dass er eine Präambel (430) und einen Dateikopf (420') enthält.

5. Verfahren nach einem der vorhergehenden Ansprüche, wobei das Konstruieren enthält, die Lücke so zu konstruieren, dass sie ein leerer Raum (360) ist.

6. Verfahren nach einem der vorhergehenden Ansprüche, wobei das Konstruieren enthält, die Lücke (484) so zu konstruieren, dass sie ein Ruhesymbol (480) enthält.

7. Verfahren nach einem der vorhergehenden Ansprüche, wobei das Konstruieren enthält, den ersten Teil des Pakets (500) so zu konstruieren, dass er eine Präambel (530) und einen Dateikopf (520) enthält, und den dritten Teil des weiteren Pakets (500') so zu konstruieren, dass er keine Präambel enthält.

8. Verfahren nach Anspruch 1, wobei das weitere Paket (500') einen vierten Teil (510') enthält, wobei der dritte Teil (530, 520) von dem vierten Teil (510) durch eine weitere Lücke getrennt ist, wobei der Anfang des vierten Teils (510') mit dem Anfang des zweiten Teils (510) ausgerichtet ist.

9. Vorrichtung, die Folgendes umfasst:
eine Rahmenkonstruktionseinheit, die konfiguriert ist, einen Rahmen zu konstruieren, der Folgendes enthält:
ein Paket (400), das einen ersten und einen zweiten Teil enthält, wobei der erste Teil (420, 430) von dem zweiten Teil (410) durch eine Ruheperiodenlücke getrennt ist; und
ein weiteres Paket (400'), das einen dritten Teil (420', 430') enthält; wobei die Vorrichtung konfiguriert ist, das weitere Paket auf einem anderen Kanal als das Paket zu senden;
**dadurch gekennzeichnet, dass** die Rahmenkonstruktionseinheit konfiguriert ist, in die Lücke mindestens ein Symbol (480) einer Gruppe einzufügen, die ein Kanalschätzsymbol und ein Ruhesymbol umfasst, und dadurch, dass ein Anfang des dritten Teils (420', 430') auf einen einer Gruppe ausgerichtet ist, die aus einem Anfang der Lücke und dem Anfang des Ruhesymbols (480) besteht.

10. Vorrichtung nach Anspruch 9, **dadurch gekennzeichnet, dass** die Vorrichtung Mittel umfasst, um die Schritte des Verfahrens nach einem der Ansprüche 2 bis 8 auszuführen.

11. Computerlesbares Medium, das prozessorausführbaren Anweisungscode umfasst, der ausgelegt ist, dann, wenn er auf einem oder mehreren Prozessoren läuft, Vorgänge auszuführen, die einen erfolgreichen Empfang eines Rahmens über ein Kommunikationsmedium erleichtern, wobei die Vorgänge Folgendes umfassen:
Empfangen eines Mehrfacheingang-Mehrfachausgang-Rahmens, MIMO-Rahmens, wobei der Rahmen mindestens zwei Pakete (400, 400') enthält, wobei ein erstes Paket (400) der beiden Pakete (400, 400') einen Präambelabschnitt (430), gefolgt von einer Lücke, enthält, und ein zweites Paket (400') der beiden Pakete (400, 400') einen Abschnitt (430') enthält; wobei das zweite Paket auf einem anderen Kanal als das erste Paket empfangen wird; und
Ausführen einer Kanalmessung zumindest während einer Periode, die durch die Lücke definiert ist;
**dadurch gekennzeichnet, dass** die Lücke mindestens ein Symbol (480) einer Gruppe enthält, die ein Kanalschätzsymbol und ein Ruhesymbol umfasst, wobei ein Anfang des Abschnitts (430'), der in dem zweiten Paket (400') enthalten ist, auf einen einer Gruppe ausgerichtet ist, die aus einem Anfang der Lücke und dem Anfang des Ruhesymbols (480) besteht.

12. Computerlesbares Medium, das prozessorausführbaren Anweisungscode umfasst, der ausgelegt ist, dann, wenn er auf einem oder mehreren Prozessoren läuft, ein Verfahren nach einem der Ansprüche 3 bis 8 auszuführen.

13. Computerlesbares Medium nach Anspruch 11 oder 12, wobei ein Dateikopfabschnitt (420) auf den Präambelabschnitt (430) folgt und der Lücke vorangeht und der Abschnitt, der in dem zweiten Paket (400') enthalten ist, mindestens eine Präambel und einen Dateikopf (430', 420') enthält.

14. Computerlesbares Medium nach einem der Ansprüche 11 bis 13, wobei das Ausführen eine Interferenzkanalmessung auf einem ersten Kanal des Kommunikationsmediums während einer Periode, die durch die Lücke begrenzt ist, enthält und ferner eine Informationskanalmessung auf einem zweiten Kanal des Kommunikationsmediums während der Periode, die durch die Lücke begrenzt ist, enthält.

## Revendications

1. Procédé comprenant :
construire une trame comportant :
un paquet (400) comportant une première partie (430, 420) et une deuxième partie (410), la première partie (430, 420) étant séparée de la deuxième partie (410) par un intervalle, l'intervalle comportant au moins un symbole (480) d'un groupe comprenant un symbole d'estimation de canal et un symbole blanc ; un autre paquet (400') comportant une troisième partie (420', 430'), un début de la troisième partie (420', 430') étant aligné avec un élément parmi un groupe consistant en un début de l'intervalle et le début du symbole blanc (480) ; le un autre paquet étant envoyé sur un canal différent de celui du paquet ; et
transmettre la trame.

2. Procédé selon la revendication 1, dans lequel l'étape de construction comprend : construire une trame entrée multiple sortie multiple, MIMO, comportant le paquet (400) et le un autre paquet (400').

3. Procédé selon la revendication 1 ou 2, dans lequel l'étape de transmission comprend : transmettre la trame au moins en partie en utilisant un multiplexage orthogonal par répartition de la fréquence.

4. Procédé selon l'une quelconque des revendications précédentes, dans lequel l'étape de construction comprend : construire la première partie du paquet (400) pour inclure un préambule (430) et la troisième partie du un autre paquet (400') pour inclure un préambule (430') et un en-tête (420').

5. Procédé selon l'une quelconque des revendications précédentes, dans lequel l'étape de construction comprend : construire l'intervalle pour qu'il soit un vide (360).

6. Procédé selon l'une quelconque des revendications précédente, dans lequel l'étape de construction comprend : construire l'intervalle (484) pour inclure un symbole blanc (480).

7. Procédé selon l'une quelconque des revendications précédentes, dans lequel l'étape de construction comprend : construire la première partie du paquet (500) pour inclure un préambule (530) et un en-tête (520) et la troisième partie du un autre paquet (500') étant vide d'un préambule.

8. Procédé selon la revendication 1, dans lequel le un autre paquet (500') comporte une quatrième partie (510'), la troisième partie (530, 520) étant séparée de la quatrième partie (510) par un autre intervalle, le début de la quatrième partie (510') étant aligné avec le début de la deuxième partie (510).

9. Appareil comprenant :
une unité de construction de trame configurée pour construire une trame comportant .
un paquet (400) comportant une première et une deuxième partie, la première partie (420, 430) étant séparée de la deuxième partie (410) par un intervalle de période blanc ; et
un autre paquet (400'), comportant une troisième partie (420', 430') ; l'appareil étant configuré pour envoyer le un autre paquet sur un canal différent de celui du paquet ;
**caractérisé en ce que** l'unité de construction de trame est configurée pour ajouter, dans l'intervalle, au moins un symbole (480) d'un groupe comprenant un symbole d'estimation de canal et un symbole blanc, et **en ce qu'**un début de la troisième partie (420', 430') est aligné avec un élément parmi un groupe consistant en un début de l'intervalle et le début du symbole blanc (480).

10. Appareil selon la revendication 9, **caractérisé en ce que** l'appareil comprend des moyens destinés à mettre en oeuvre les étapes du procédé selon l'une quelconque des revendications 2 à 8.

11. Support lisible par ordinateur comprenant un code d'instructions exécutables par un processeur conçu pour effectuer, lorsqu'il est exécuté sur un ou plusieurs processeurs, des opérations qui facilitent une réception réussie de trame par l'intermédiaire d'un moyen de communication, les opérations comprenant :
recevoir une trame entrée multiple sortie multiple, MIMO, la trame comportant au moins deux paquets (400, 400'), un premier paquet (400) des deux paquets (400, 400') comportant une section de préambule (430) suivie par un intervalle et un deuxième paquet (400') des deux paquets (400, 400') comportant une section (430') ; le deuxième paquet étant reçu sur un canal différent de celui du premier paquet ; et
exécuter une mesure de canal durant au moins une période définie par l'intervalle ;
**caractérisé en ce que** l'intervalle comprend au moins un symbole (480) d'un groupe comprenant un symbole d'estimation de canal et un symbole blanc, un début de la section (430') incluse dans le deuxième paquet (400') étant aligné avec un élément parmi un groupe consistant en un début de l'intervalle et le début du symbole blanc (480).

12. Support lisible par ordinateur comprenant un code d'instructions exécutables par un processeur conçu pour mettre en oeuvre, lorsqu'il est exécuté sur un ou plusieurs processeurs, un procédé selon l'une quelconque des revendications 3 à 8.

13. Support lisible par ordinateur selon la revendication 11 ou 12, dans lequel une section d'en-tête (420) suit la section de préambule (430) et précède l'intervalle et la section incluse dans le deuxième paquet (400') comportant au moins un préambule et un en-tête (430', 420').

14. Support lisible par ordinateur selon l'une quelconque des revendications 11 à 13, dans lequel l'étape d'exécution comprend une mesure de canal d'interférences sur un premier canal du moyen de communication durant une période délimitée par l'intervalle et comprend en outre une mesure de canal d'informations sur un deuxième canal du moyen de communication durant la période délimitée par l'intervalle.
